# EUROPÄISCHE PATENTSCHRIFT

(11) **EP 3 449 714 B1**
(45) Veröffentlichungstag und Bekanntmachung des Hinweises auf die Patenterteilung: **21.07.2021**
(21) Anmeldenummer: 18174855.9
(22) Anmeldetag: 29.05.2018
(51) Int. Cl.: A01D 67/00, A01D 43/08, B62D 55/04

(54) **SERIE VON FELDHÄCKSLERN SOWIE VERFAHREN ZU DEREN HERSTELLUNG**
SERIES OF FORAGE HARVESTERS AND METHOD FOR THE PRODUCTION THEREOF
SÉRIE DE RAMASSEUSES-HACHEUSES AINSI QUE LEUR PROCÉDÉ DE FABRICATION

(30) Priorität: 29.08.2017 DE 102017119792
(43) Veröffentlichungstag der Anmeldung: 06.03.2019
(73) Patentinhaber: CLAAS Selbstfahrende Erntemaschinen GmbH, 33428 Harsewinkel (DE)
(72) Erfinder: Rathjens, Jochen, 33602 Bielefeld (DE)
(74) Vertreter: CLAAS Gruppe

(56) Entgegenhaltungen:
- EP-A1- 1 302 387
- DE-A1- 10 327 478
- DE-A1-102008 033 067
- US-A- 5 290 201
- US-A1- 2010 133 019

## Beschreibung

Die vorliegende Erfindung betrifft eine Serie von Feldhäckslern, die von einer Vielzahl von Feldhäckslern gebildet ist. Weiterhin betrifft die vorliegende Anmeldung ein Verfahren zur Herstellung einer Serie von Feldhäckslern.

Serien von Feldhäckslern sind im Stand der Technik bereits bekannt. Diese umfassen jeweils eine Vielzahl von Feldhäckslern, die sich typischerweise durch eine hohe Anzahl von Gleichteilen auszeichnen. Unterschiede zwischen Feldhäckslern derselben Serie können beispielsweise in bestimmten Ausstattungsmerkmalen oder Leistungsabstufungen der jeweiligen Antriebseinrichtung bestehen.

Insbesondere ist es vorstellbar, dass verschiedene Feldhäcksler derselben Serie mit unterschiedlichen "Vortriebselementen" ausgestattet werden. Unter solchen werden im Sinne der vorliegenden Anmeldung diejenigen Elemente verstanden, mittels derer ein jeweiliger Feldhäcksler eine Relativbewegung gegenüber einem Untergrund ausführen kann, insbesondere mittels Abrollen. In aller Regel sind solche Vortriebselemente von typischen Einzelrädern in Form von Rundrädern oder von Raupenlaufwerken gebildet. Letztere umfassen typischerweise mehrere Räder, die von einem Laufgurt umspannt sind, wobei der Laufgurt die unmittelbare Übertragung einer Antriebskraft auf den Untergrund vornimmt. Dabei versteht es sich, dass Raupenlaufwerke eine gewisse axiale Länge bezogen auf eine Längsachse des jeweiligen Feldhäckslers aufweisen, die typischerweise einen Durchmesser eines "normalen" Einzelrades deutlich übersteigt. Mit anderen Worten weist ein Raupenlaufwerk in aller Regel an einem Feldhäcksler einen größeren Platzbedarf in Bezug auf dessen axiale Länge auf.

Dies hat wiederum zur Folge, dass sowohl Raupenlaufwerke als auch Einzelräder nicht ohne Weiteres an Feldhäckslern ein und derselben Serie von Feldhäckslern angeordnet werden können. Abhilfe hierzu schafft beispielsweise die deutsche Offenlegungsschrift DE 10 2008 033 067 A1, die einen Feldhäcksler beschreibt, dessen Länge veränderbar ist. Auf diese Weise ist die Möglichkeit gegeben, ein und denselben Feldhäcksler wahlweise an dessen Vorderachse mit normalen Einzelrädern oder mit Raupenlaufwerken auszustatten. Hierzu wird vorgeschlagen, den jeweiligen Feldhäcksler mittels Einsetzen eines Verlängerungsmoduls zu verlängern und auf diese Weise Raum für Raupenlaufwerke zu schaffen. Ebenso wird alternativ vorgeschlagen, den Feldhäcksler teleskopierbar auszugestalten, sodass dessen Länge frei verändert werden kann.

Wenngleich die in der genannten Schrift beschriebene Technik eine maximale Flexibilität hinsichtlich der Verwendung verschiedener Vortriebselemente an ein und demselben Feldhäcksler verleiht, ist eine Umrüstung in der Praxis doch zumindest derart aufwendig, dass diese in vielen Fällen als zu komplex angesehen wird. Gleichzeitig wird die Notwendigkeit einer Umrüstung von Einzelrädern auf Raupenlaufwerke oder umgekehrt je nach Einzelfall oftmals für nicht ausreichend dringend angesehen als der notwendige Arbeitsaufwand zur Durchführung der Umrüstung auf sich genommen würde.

Der vorliegenden Erfindung liegt nunmehr die Aufgabe zugrunde, eine Serie von Feldhäckslern hervorzubringen, die eine Vereinbarkeit von Feldhäckslern mit Raupenlaufwerken und Feldhäckslern mit Einzelrädern innerhalb der Serie schafft.

Die zugrunde liegende Aufgabe wird mittels einer Serie von Feldhäckslern mit den Merkmalen des Anspruchs 1 gelöst. Diese Serie umfasst mindestens einen Feldhäcksler, der einen Hauptträger in Form eines Langträgers umfasst. Dieser Langträger weist eine Länge auf, die eine Länge eines in Form eines Kurzträgers ausgebildeten Hauptträgers eines anderen Feldhäckslers der Serie übersteigt. Mit anderen Worten ist ein jeweiliger Langträger länger als ein jeweiliger Kurzträger, sodass diese einen Längenunterschied aufweisen. Sowohl ein jeweiliger Langträger als auch ein jeweiliger Kurzträger, die für die erfindungsgemäße Serie verwendet werden, weisen zumindest im Wesentlichen identisch ausgebildete Frontabschnitte und Heckabschnitte auf. Die Langträger verfügen zudem jeweils über einen Mittelabschnitt, den die Kurzträger nicht aufweisen. Im Ergebnis umfasst die Serie von Feldhäckslern mithin "lange Feldhäcksler" und "kurze Feldhäcksler", wobei die langen Feldhäcksler mit Hauptträgern in Form der Langträger und die kurzen Feldhäcksler mit Hauptträgern in Form der Kurzträger ausgestattet sind. Dies bedeutet auch, dass ein Umbau von einem langen Feldhäcksler hin zu einem kurzen Feldhäcksler oder umgekehrt, wie es in dem oben genannten Dokument zum Stand der Technik möglich ist, bei den Feldhäckslern der erfindungsgemäßen Serie nicht durchgeführt werden kann. Stattdessen sind die einmal mit ihren jeweiligen Hauptträgern ausgestatteten Feldhäcksler der Serie dauerhaft entweder lang oder kurz.

Unter einer "Serie von Feldhäckslern" wird im Sinne der vorliegenden Anmeldung eine Vielzahl von Feldhäckslern grundsätzlich gleichen Aufbaus verstanden, die sich lediglich durch singuläre Merkmale voneinander unterscheiden. Insbesondere weisen sämtliche Feldhäcksler einer Serie eine Vielzahl von Gleichteilen auf, wobei typischerweise mindestens 90 % der verwendeten Bauteile, die übergreifend über alle Feldhäcksler der Serie verwendet werden, identisch sind. Es versteht sich, dass sämtliche Feldhäcksler einer Serie in aller Regel von ein und demselben Hersteller stammen.

Die Feldhäcksler der erfindungsgemäßen Serie umfassen jeweils mindestens eine Antriebseinrichtung, wobei unter einer solchen im Sinne der vorliegenden Anmeldung in aller Regel ein Verbrennungsmotor verstanden wird, der dazu geeignet ist, mindestens eines der Vortriebselemente sowie die typischen Arbeitsorgane eines jeweiligen Feldhäckslers anzutreiben. Als solches ist insbesondere das Häckselorgan zu nennen, mittels dessen jeweiliges Erntegut gehäckselt werden kann.

Die Arbeitsorgane und die Antriebseinrichtung sind jeweils auf mindestens einem durchlaufenden Hauptträger angeordnet, typischerweise werden zwei parallel zueinander verlaufende sowie voneinander beabstandete Hauptträger verwendet. Letztere sind in der erfindungsgemäßen Weise bei mindestens einem Feldhäcksler der Serie als Langträger sowie bei mindestens einem anderen Feldhäcksler der Serie als Kurzträger ausgebildet. Der bzw. die Hauptträger dienen dazu, die an ihm montierten Bauteile zu tragen, das heißt Gewichtskräfte dieser Bauteile abzuleiten. Insbesondere werden die Gewichtskräfte in Richtung der Vortriebselemente und schließlich mittels der Vortriebselemente in den Untergrund eingeleitet.

Wie eingangs bereits beschrieben, werden unter "Vortriebselementen" im Sinne der vorliegenden Anmeldung diejenigen Elemente verstanden, mittels derer ein jeweiliger Feldhäcksler eine Bewegung relativ zu dem Untergrund ausführen kann. Insbesondere können die Vortriebselemente in Form von Einzelrädern bzw. Rundrädern oder von Raupenlaufwerken gebildet sein. Weiterhin ist mindestens eines, vorzugsweise mehrere, der Vortriebselemente zumindest mittelbar mit der Antriebseinrichtung verbunden, sodass das jeweilige Vortriebselement - und mithin der gesamte Feldhäcksler - antreibbar ist.

Unter einem "Raupenlaufwerk" wird dabei im Sinne der vorliegenden Anmeldung ein Vortriebselement verstanden, dass zwei einander gegenüberliegende Haupträder aufweist, die von einem Laufgurt umspannt sind, wobei zwischen den Haupträdern mindestens ein Hilfsrad angeordnet ist, dessen Durchmesser in aller Regel die Durchmesser der Haupträder deutlich unterschreitet. Die Haupträder eines Raupenlaufwerks weisen typischerweise denselben Durchmesser auf, sodass sich der Laufgurt in einem Bereich zwischen den Haupträdern zumindest im Wesentlichen parallel zu einer Aufstandsfläche des Raupenlaufwerks erstreckt. Das mindestens eine Hilfsrad dient dazu, den Laufgurt im Bereich zwischen den Haupträdern "niederzuhalten". Hierzu wirkt das Hilfsrads mit einem unteren Abschnitt des Laufgurts zusammen, wobei auf das Raupenlaufwerk wirkende Kräfte zusätzlich zu den Haupträdern auch mittels des Hilfsrades in den Untergrund einleitbar sind und somit insgesamt eine Krafteinleitung von dem Raupenlaufwerk in den Untergrund sich über eine vergleichsweise große Fläche des Laufgurts verteilt. Hierin ist der wesentliche Unterschied zur Kraftableitung eines Einzelrades zu sehen, dessen Krafteinleitungsfläche im Vergleich zu einem Raupenlaufwerk sehr gering ist, sodass ein solches Einzelrad eine vergleichsweise hohe Flächenpressung auf den jeweiligen Untergrund ausübt.

Die erfindungsgemäße Serie hat viele Vorteile. Insbesondere ermöglicht sie es, verschiedene Feldhäcksler derselben Serie mit verschiedenen Vortriebselementen auszustatten, wobei diejenigen Feldhäcksler der Serie, die mit mindestens einem Hauptträger in Form eines Langträgers ausgebildet sind, vorteilhafterweise zumindest beidseits ihrer Vorderachse mit Vortriebselementen in Form von Raupenlaufwerken zusammenwirken. Gleichzeitig wirken diejenigen Feldhäcksler, die mit mindestens einem Kurzträger ausgebildet sind, vorteilhafterweise an ihrer jeweiligen Vorderachse mit Einzelrädern zusammen. Mithin müssen sich die verschiedenen Feldhäcksler der erfindungsgemäßen Serie zumindest im Wesentlichen lediglich im Umfang der verschieden ausgeführten Hauptträger sowie der verschiedenen (vorderen) Vortriebselemente unterscheiden, während die Feldhäcksler über die gesamte Serie hinweg im Übrigen zumindest im Wesentlichen, vorzugsweise vollständig, identisch ausgebildet sein können.

Hierbei versteht es sich, dass kleinere Unterschiede, die einzig und allein auf den Längenunterschied zwischen den verschiedenen Feldhäckslern zurückzuführen sind, im Sinne der vorliegenden Anmeldung nicht als "wesentliche Unterschiede" angesehen werden. Insbesondere ist es denkbar, dass Bauteilträger, an denen innerhalb eines jeweiligen Feldhäckslers verschiedene funktionale Einheiten angeordnet sind, bei Verwendung eines Langträgers als Hauptträger ebenfalls innerhalb des Feldhäckslers länger ausgebildet sein müssen als ein entsprechender Bauteilträger bei einem kurzen Feldhäcksler. Gleichwohl sind jedoch zumindest die Antriebseinrichtung sowie sämtliche Arbeitsorgane sämtlicher Feldhäcksler der erfindungsgemäßen Serie unabhängig davon, welche Hauptträger jeweils verwendet werden, identisch. Dasselbe gilt beispielsweise für die Fahrerkabine und eine Reihe weiterer Bauteile, beispielsweise des Antriebsstrangs. Dies schließt somit auch Fälle mit ein, bei denen beispielsweise verschiedene Feldhäcksler der Serie mit verschiedenen Vorsatzgeräten, beispielsweise mit solchen unterschiedlicher Breite, ausgestattet sind. Es versteht sich, dass derartig verschiedene Vorsatzgeräte unabhängig davon an einem jeweiligen Feldhäcksler angeordnet werden können, ob dieser mit einem Hauptträger in Form eines Langträgers oder einen solchen in Form eines Kurzträgers ausgestattet ist.

Die erfindungsgemäße Serie bietet folglich den besonderen Vorteil, dass im Zuge der Herstellung der einzelnen Feldhäcksler ohne Weiteres zwischen solchen, die lang ausgebildet werden sollen, und solchen, die kurz ausgebildet werden sollen, gewechselt werden kann. Der im Wesentlichen einzige Unterschied besteht nämlich darin, als Hauptträger entweder einen Langträger oder einen Kurzträger zu verwenden. Bezogen auf die gewünschte Auswahl der Vortriebselemente kann in der Praxis mithin zwischen langen "Raupenhäckslern" und kurzen "Radhäckslern" unterschieden werden, ohne dass hierfür in der Produktion irgendeine Umstellung oder sonstiger Aufwand notwendig ist.

In einer vorteilhaften Ausgestaltung der erfindungsgemäßen Serie entspricht eine Länge des Mittelabschnitts eines jeweiligen Langträgers zumindest im Wesentlichen, vorzugsweise vollständig, dem Längenunterschied zwischen dem Langträger und einen jeweiligen Kurzträger. Mit anderen Worten sind die Langträger genau um das Maß länger als die Kurzträger, das einer Länge eines Mittelabschnitts eines jeweiligen Langträgers entspricht. Bei entsprechend ausgebildeten Hauptträgern ist es besonders einfach möglich, die Frontabschnitte und die Heckabschnitte unabhängig von der Länge des jeweiligen Hauptträger identisch auszubilden.

Weiterhin ist eine solche Ausgestaltung der erfindungsgemäßen Serie von Vorteil, bei der die Hauptträger serienübergreifend einstückig ausgebildet sind. Eine Umrüstung, beispielsweise in Form einer modularen Gestaltung wie sie aus dem Stand der Technik bekannt ist, ist mithin nicht möglich. Diese ist jedoch auch nicht erforderlich bzw. gewünscht, da der Aufwand zur Umrüstung eines einzelnen Feldhäckslers von einem langen Feldhäcksler hin zu einem kurzen Feldhäcksler oder umgekehrt schlicht zu groß ist. Auch sind die hierfür erforderlichen Bauteile nicht in derselben Weise wirtschaftlich herstellbar, wie die für die erfindungsgemäße Serie verwendeten Hauptträger. Dasselbe gilt für die Fertigung derartiger Feldhäcksler.

In verfahrenstechnischer Hinsicht wird die zugrunde liegende Aufgabe mittels eines Verfahrens zur Herstellung einer Serie von Feldhäckslern mit den Verfahrensschritten gemäß Anspruch 4 gelöst. Dieses Verfahren sieht vor, dass im Zuge der Herstellung eines jeweiligen Feldhäckslers der Serie entweder mindestens ein Hauptträger in Form eines Kurzträgers oder mindestens ein Hauptträger in Form eines Langträgers ausgewählt und sodann im Weiteren verwendet wird. Dabei versteht es sich, dass bei einem jeweiligen Feldhäcksler entweder sämtliche Hauptträger von Langträgern oder sämtliche Hauptträger von Kurzträgern gebildet sind. Weiterhin werden im Rahmen der Herstellung diejenigen Feldhäcksler, deren Hauptträger von mindestens einem Langträger gebildet ist bzw. sind, mit Vortriebselementen in Form von Raupenlaufwerken ausgestattet. Umgekehrt werden diejenigen Feldhäcksler der Serie, die mit Kurzträgern ausgestattet sind, mit Vortriebselementen in Form von Einzelrädern ausgestattet.

Mittels des erfindungsgemäßen Verfahrens die erfindungsgemäße Serie von Feldhäckslern besonders einfach herstellbar. Dabei bietet das Verfahren die vorstehend bereits erläuterten Vorteile, nämlich die besonders einfache Handhabung der Produktion, wobei zur Unterscheidung zwischen einem langen Feldhäcksler und einem kurzen Feldhäcksler im Wesentlichen lediglich zwischen den verschiedenen Hauptträgern gewählt werden muss. Die Frontabschnitte und die Heckabschnitte dieser Hauptträger sind unabhängig von deren Länge, das heißt unabhängig von der Anwesenheit eines Mittelabschnitts beim Langträger, zumindest im Wesentlichen, vorzugsweise vollständig, identisch ausgebildet sodass die Herstellung eines langen Feldhäckslers fast vollständig gleichlaufend einer solchen eines kurzen Feldhäckslers ablaufen kann. Dies ist sowohl im Hinblick auf besonders wirtschaftliche Produktionsbedingungen wie auch eine niedrige Fehleranfälligkeit der Produktion der Serie insgesamt von erheblichem Vorteil. Insbesondere sind die Arbeitsschritte und Arbeitsabläufe fast vollständig unabhängig davon, welche Art von Hauptträger letztlich für einen jeweiligen Feldhäcksler der Serie verbaut wird. Ferner ist das Umschalten der Produktion von "Raupenhäckslern" zu "Radhäckslern" oder umgekehrt besonders einfach möglich, ohne dass die Produktionsstraße umfassend verändert oder angepasst werden muss.

Die erfindungsgemäße Serie sowie das erfindungsgemäße Verfahren werden nachstehend anhand eines Ausführungsbeispiels, das in den Figuren dargestellt ist, näher erläutert. Es zeigt:
- Fig. 1:: Eine Seitenansicht einen "Raupenhäckslers" einer erfindungsgemäßen Serie von Feldhäckslern,
- Fig. 2:: Eine Seitenansicht eines "Radhäckslers" der erfindungsgemäßen Serie,
- Fig. 3:: Eine Seitenansicht eines Skeletts des Raupenhäckslers gemäß Figur 1 und
- Fig. 4:: Eine Seitenansicht eines Skeletts des Radhäckslers gemäß Figur 2.

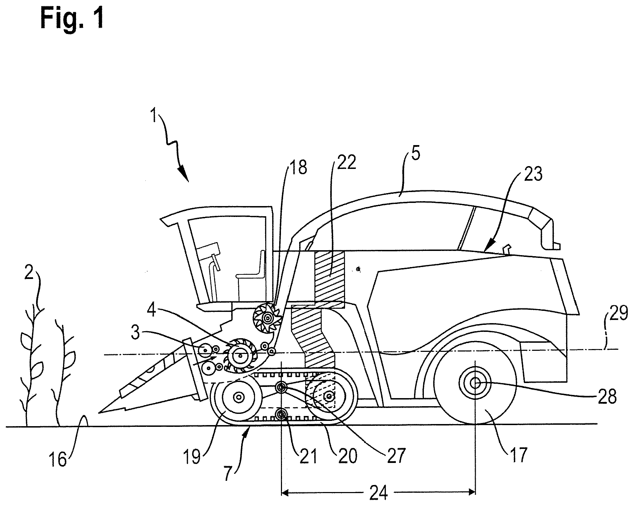

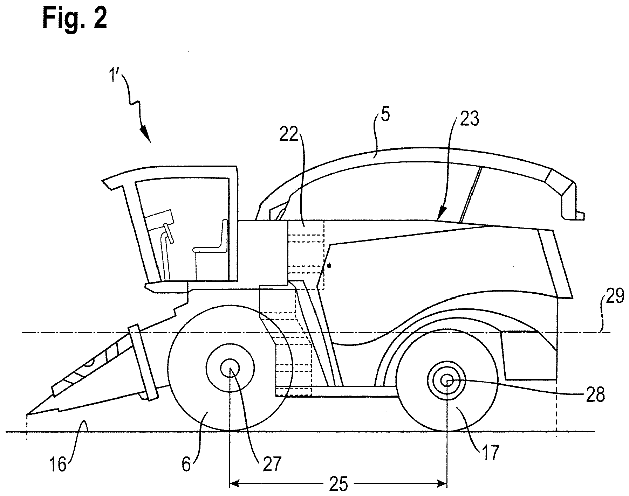

Das Ausführungsbeispiel, das in den **Figuren 1 bis 4** gezeigt ist, beschreibt zwei Feldhäcksler **1**, **1'** einer erfindungsgemäßen Serie von Feldhäckslern. Der erste Feldhäcksler **1** ist in einer Seitenansicht in **Figur 1** und der zweite Feldhäcksler **1'** in einer Seitenansicht in **Figur 2** dargestellt. Der erste Feldhäcksler **1** der erfindungsgemäßen Serie beschreibt einen "langen Feldhäcksler", dessen in **Figur 1** nicht dargestellte Hauptträger in Form von Langträgern **10** ausgebildet sind. Dieser Feldhäcksler **1** ist an seiner Vorderachse **27** beidseits mit Raupenlaufwerken **7** ausgestattet. Diese umfassen jeweils zwei einander gegenüberliegende Haupträder **19,** die von einem Laufgurt **20** umspannt sind. Die Haupträder **19** weisen denselben Durchmesser auf. Zwischen den Haupträder **19** ist ein Hilfsrad **21** angeordnet, dass mit einem unteren Abschnitt des Laufgurts **20** zusammenwirkt.

Im Übrigen ist der Feldhäcksler **1** mit einem Förderorgan **3**, einem Häckselorgan **4**, einem Beschleunigungsorgans **18** und einem Ausruforgan **5** ausgestattet. Diese Organe bilden gemeinsam die Arbeitsorgane des Feldhäckslers **1**, mittels derer letzterer dazu geeignet ist, Erntegut **2** zu ernten und zu verarbeiten. An seiner Hinterachse **28** ist der Feldhäcksler **1** beidseits jeweils mit einem Hinterrad **17** ausgestattet. Die Hinterräder **17** sind hier in Form üblicher Einzelräder ausgebildet. Die Vorderachse **27** und die Hinterachse **28** des Feldhäckslers **1** befinden sich in einem parallel zu einer Längsachse **29** des Feldhäckslers **1** gemessenen Achsabstand **24.**

Die Raupenlaufwerke **7** sowie die Hinterräder **17** bilden jeweils Vortriebselemente des Feldhäckslers **1**, mittels derer der Feldhäcksler **1** unmittelbar auf einem Untergrund **16** aufsteht. Die Vortriebselemente befähigen den Feldhäcksler **1** dazu, sich relativ zu dem Untergrund **16** zu bewegen. Wie sich anhand der Darstellung gemäß **Figur 1** bereits ergibt, beanspruchen die Raupenlaufwerke **7** in Längsrichtung des Feldhäckslers **1** betrachtet mehr Raum als die Hinterräder **17.** Mit anderen Worten ist eine Länge eines jeweiligen Raupenlaufwerks **7** deutlich größer als ein Durchmesser eines Hinterrades **17.** Dieses Verhältnis gilt grundsätzlich bei dem Vergleich von Raupenlaufwerken zu Einzelrädern, was schlechterdings durch die Konstruktion von Raupenlaufwerken bedingt ist und letztlich auch den Vorteile der schonenden Untergrundbehandlung mit sich bringt. In **Figur 1** ist bereits schematisch ein Differenzbereich **22** dargestellt, der eine Längendifferenz zwischen dem Feldhäcksler **1** gemäß **Figur 1** und demjenigen gemäß **Figur 2** beschreibt. Hierauf wird nachstehend gesondert eingegangen.

Genannte **Figur 2** beschreibt einen weiteren Feldhäcksler **1'** der erfindungsgemäßen Serie von Feldhäckslern, der im Unterschied zu dem Feldhäcksler **1** an seiner Vorderachse **27** mit Einzelrädern **6** ausgestattet ist. Weiterhin ist der Feldhäcksler **1'** mit Hauptträgern in Form von Kurzträgern **11** ausgebildet, die in **Figur 2** nicht dargestellt sind. Unabhängig von den verschieden ausgebildeten Hauptträgern sowie den verschiedenen Vortriebselementen an der Vorderachse **27** sind die Feldhäcksler **1**, **1'** gemäß den **Figuren 1** **und** **2** zumindest im Wesentlichen gleich ausgebildet. Die Unterschiede beschränken sich auf die unterschiedlichen Längen der Feldhäcksler **1, 1',** wobei ein Achsabstand **25** zwischen der Vorderachse **27** und der Hinterachse **28** des Feldhäckslers **1'** den Achsabstand **24** des Feldhäckslers **1** unterschreitet. Wie sich anhand der Darstellungen unmittelbar ergibt, beanspruchen die Einzelräder **6** an dem Feldhäcksler **1'** im Vergleich zu den Raupenlaufwerken **7** einen deutlich kleineren Raum bezogen auf eine Längsausdehnung parallel zu der Längsachse **29** des Feldhäckslers **1'.** Entsprechend ist es nicht erforderlich, eine Länge vorzuhalten, die es erlauben würde, an dem Feldhäcksler **1'** Raupenlaufwerke **7** zu installieren.

Die erfindungsgemäße Serie hat mithin den besonderen Vorteil, dass sich die verschiedenen Feldhäcksler **1, 1'** nur im Umfang einer sehr geringen Anzahl von Bauteilen voneinander unterscheiden, nämlich insbesondere im Hinblick auf die verwendeten Hauptträger sowie solche Bauteile, die aufgrund einer Längendifferenz zwischen den Langträgern **10** und den Kurzträgern **11** unterschiedlich ausgebildet werden müssen. Dies betrifft beispielsweise ein Gehäuse **23** eines jeweiligen Feldhäckslers **1, 1'.**

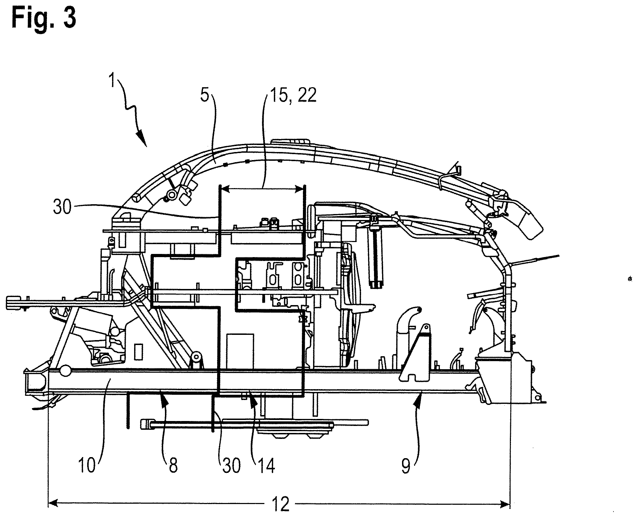

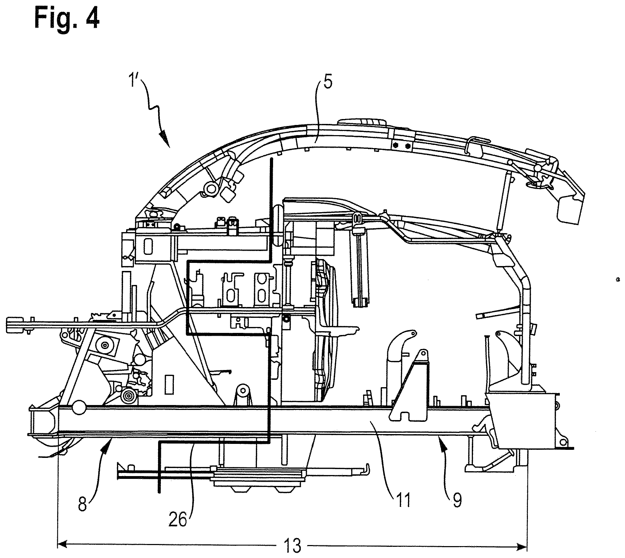

Die verschiedenen Hauptträger der verschiedenartig ausgebildeten Feldhäcksler **1, 1'** der erfindungsgemäßen Serie ergeben sich besonders gut anhand der Darstellungen gemäß den **Figuren 3** **und** **4****.** Diese zeigen jeweils einen Tragrahmen eines jeweiligen Feldhäckslers **1**, **1'.** Der Feldhäcksler **1** gemäß den **Figuren 1** **und** **3** ist mit zwei in Längsrichtung des Feldhäckslers **1** orientierten Hauptträgern in Form von Langträgern **10** ausgestattet. Diese Langträger **10** umfassen einen Frontabschnitt **8,** einen Heckabschnitt **9** sowie einen Mittelabschnitt **14.** In dem Frontabschnitt **8** sind die Arbeitsorgane des Feldhäckslers **1** angeordnet. Eine Antriebseinrichtung, die in **Figur 3** nicht dargestellt ist, ist in dem Heckabschnitt **9** angeordnet. Der Mittelabschnitt **14** hat als solcher keine technische Bedeutung, sondern dient alleine dazu, eine Länge **12** des Langträgers **10** auf ein solches Maß anzuheben, dass der Feldhäcksler 1 an seiner Vorderachse **27** mit Raupenlaufwerken **7** ausgestattet werden kann. Mit anderen Worten dient der Mittelabschnitt **14,** der seinerseits eine Länge **15** aufweist, dazu, Raum für Raupenlaufwerke **7** zu schaffen.

Entsprechend versteht es sich, dass ein solcher Raum an einem Feldhäcksler **1**', der an seiner Vorderachse **27** mit Einzelrädern **6** ausgestattet werden soll, nicht erforderlich ist. Entsprechend sind Hauptträger eines solchen Feldhäckslers **1'** der erfindungsgemäßen Serie in Form von Kurzträgern **11** gebildet. Diese umfassen vergleichbar zu den Langträgern **10** einen Frontabschnitt **8** sowie einen Heckabschnitt **9,** wobei ebenfalls in gleicher Weise vergleichbar zu den Langträgern **10** in dem Frontabschnitt **8** die Arbeitsorgane und in dem Heckabschnitt **9** die in **Figur 4** nicht dargestellte Antriebseinrichtung des Feldhäckslers **1'** angeordnet sind. Letztlich unterscheiden sich mithin die Langträger **11** und die Kurzträger **10** lediglich durch den Mittelabschnitt **14** sowie dessen Länge **15.** Mit anderen Worten übersteigt die Länge **12** eines jeweiligen Langträgers **10** ein Längen **13** eines jeweiligen Kurzträgers **11** genau um die Länge **15** des Mittelabschnitts **14** des Langträgers **10.** Der Mittelabschnitt **14** entspricht dann auch in seiner Längsausdehnung dem Differenzbereich **22,** der bereits in den **Figuren** 1 **und** **2** veranschaulicht war. Bei den Kurzträgern **10** grenzen die jeweiligen Heckabschnitte **9** und die jeweiligen Frontabschnitte **8** unmittelbar aneinander. Eine "Kontaktstelle" dieser beiden Abschnitte befindet sich in einer in **Figur 4** dargestellten Trennebene **26,** an der der jeweilige Kurzträger **11** gedanklich im Vergleich zu einem jeweiligen Langträger **10** "aufgetrennt" und mittels Einsetzen des Mittelabschnitts **14** ergänzt ist. Besagte Trennebene **26** findet sich demzufolge in **Figur 3** in Form zweier, den Differenzbereich **22** begrenzender Linien **30** wieder.

Anhand der Darstellungen gemäß den **Figuren 3** **und** **4** ergibt sich besonders deutlich, dass der grundsätzliche Aufbau der verschiedenen ausgebildeten Feldhäcksler **1**, **1'** der erfindungsgemäßen Serie sich kaum unterscheidet, wobei die Unterschiede sich lediglich in den Hauptträgern, nämlich den Langträger **10** oder den Kurzträgern **11**, niederschlagen sowie in solchen Bauteilen, die durch die unterschiedlichen Längen **12**, **13** der verschiedenen Hauptträger bedingt sind. Für die Produktion der erfindungsgemäßen Serie bedeutet dies eine besonders hohe Flexibilität, da zumindest im Wesentlichen unabhängig von der Wahl eines jeweiligen Hauptträgers der herzustellende Feldhäcksler **1**, **1'** mit denselben Komponenten, das heißt insbesondere Arbeitsorganen und Antriebseinrichtung, gefertigt wird. Nach der Herstellung der Feldhäcksler **1**, **1'** ist eine Veränderung einer Länge des jeweiligen Feldhäckslers **1**, **1'** nicht möglich, da die Hauptträger einstückig ausgebildet sind. Mithin sind insbesondere ein Teleskopieren und/oder eine Längenänderung mittels der Einfügung oder Entfernung von Modulen nicht vorgesehen.

### Bezugszeichenliste

- 1, 1': Feldhäcksler
- 2: Erntegut
- 3: Förderorgan
- 4: Häckselorgan
- 5: Auswurforgan
- 6: Einzelrad
- 7: Raupenlaufwerk
- 8: Frontabschnitt
- 9: Heckabschnitt
- 10: Langträger
- 11: Kurzträger
- 12: Länge des Langträgers
- 13: Länge des Kurzträgers
- 14: Mittelabschnitt
- 15: Länge des Mittelabschnitts
- 16: Untergrund
- 17: Hinterrad
- 18: Beschleunigungsorgan
- 19: Hauptrad
- 20: Laufgurt
- 21: Hilfsrad
- 22: Differenzbereich
- 23: Gehäuse
- 24: Achsabstand
- 25: Achsabstand
- 26: Trennebene
- 27: Vorderachse
- 28: Hinterachse
- 29: Längsachse
- 30: Linie

## Patentansprüche

1. Serie von Feldhäckslern (1, 1'), umfassend eine Mehrzahl von Feldhäckslern (1, 1') zum Häckseln von auf einem Arbeitsfeld befindlichen Erntegut (2), jeder der Feldhäcksler (1, 1') umfassend
- mindestens ein Arbeitsorgan in Form eines Förderorgans (3) zur Förderung von geschnittenem Erntegut (2) in Richtung eines Häckselorgans (4),
- mindestens ein Arbeitsorgan in Form eines Häckselorgans (4) zum Häckseln des geschnittenen Ernteguts (2),
- mindestens eine Antriebseinrichtung zum Antrieb mindestens eines Vortriebselements, insbesondere eines Einzelrades (6) oder eines Raupenlaufwerks (7), sowie der Arbeitsorgane sowie
- mindestens einen durchlaufenden Hauptträger zur Aufnahme der Arbeitsorgane sowie der Antriebseinrichtung,
wobei mittels des Hauptträgers zumindest anteilig Gewichtskräfte der Arbeitsorgane und der Antriebseinrichtung ableitbar sind,
wobei die Arbeitsorgane zumindest mittelbar in einem Frontabschnitt (8) und die Antriebseinrichtung zumindest mittelbar in einem Heckabschnitt (9) des Hauptträgers an selbigen in Kraft übertragender Weise angeschlossen sind,
**dadurch gekennzeichnet, dass**
ein in Form eines Langträgers (10) ausgebildeter Hauptträger eines Feldhäckslers (1) der Serie eine Länge (12) aufweist, die eine Länge (13) eines in Form eines Kurzträgers (11) ausgebildeten Hauptträgers eines anderen Feldhäckslers (1') der Serie übersteigt, sodass der Langträger (10) und der Kurzträger (11) einen Längenunterschied aufweisen,
wobei sowohl der Langträger (10) als auch der Kurzträger (11) zumindest im Wesentlichen identisch ausgebildete Frontabschnitte (8) und Heckabschnitte (9) aufweisen und
wobei der Langträger (10) im Vergleich zum Kurzträger (11) über einen zusätzlichen Mittelabschnitt (14) verfügt,
wobei sämtliche Feldhäcksler (1) der Serie, die mit einem Langträger (10) ausgestattet sind, zumindest an deren Vorderachse mit Vortriebselementen in Form von Raupenlaufwerken (7) ausgestattet sind, und wobei sämtliche Feldhäcksler der Serie, die mit einem Kurzträger (11) ausgestattet sind, an deren Vorderachse mit Vortriebselementen in Form von Einzelrädern (6) ausgestattet sind.

2. Serie nach Anspruch 1, **dadurch gekennzeichnet, dass** eine Länge (15) des Mittelabschnitts (14) zumindest im Wesentlichen, vorzugsweise vollständig, dem Längenunterschied zwischen dem Langträger (10) und dem Kurzträger (11) entspricht.

3. Serie nach Anspruch 1 oder 2, **dadurch gekennzeichnet, dass** die Langträger (10) und die Kurzträger (11) einstückig ausgebildet sind.

4. Verfahren zur Herstellung einer Serie von Feldhäckslern (1, 1'), umfassend die folgenden Verfahrensschritte
a) Arbeitsorgane des jeweiligen Feldhäckslers (1, 1') werden zumindest mittelbar in oder an einem Frontabschnitt (8) eines Hauptträgers montiert.
b) Eine Antriebseinrichtung eines jeweiligen Feldhäckslers (1, 1') der Serie wird in einem Heckabschnitt (9) des Hauptträgers montiert.
c) Vortriebselemente, insbesondere Einzelräder (6) und/oder Raupenlaufwerke (7), mittels derer der fertige Feldhäcksler (1, 1') in unmittelbaren Kontakt zu einem Untergrund (16) treten kann, werden zumindest mittelbar an dem Hauptträger angeschlossen, sodass auf den Feldhäcksler (1, 1') wirkende Kräfte mittels des Hauptträgers auf die Vortriebselemente und schließlich auf den Untergrund (16) übertragbar sind,
**gekennzeichnet durch** die folgenden Verfahrensschritte:
d) Im Zuge der Herstellung mindestens eines Feldhäckslers (1') der Serie wird ein Hauptträger in Form eines Kurzträgers (11) ausgewählt und für das weitere Verfahren verwendet, wobei der so gefertigte Feldhäcksler (1') zumindest an seiner Vorderachse mit Vortriebselementen in Form von Einzelrädern (6) ausgestattet wird.
e) Im Zuge der Herstellung mindestens eines anderen Feldhäckslers (1) der Serie wird ein Hauptträger in Form eines Langträgers (10) ausgewählt und für das weitere Verfahren verwendet, wobei der so gefertigte Feldhäcksler (1) zumindest an seiner Vorderachse mit Vortriebselementen in Form von Raupenlaufwerken (7) ausgestattet wird,
wobei eine Länge (12) des Langträgers (10) eine Länge (13) des Kurzträgers (11) übersteigt,
wobei sowohl der Langträger (10) als auch der Kurzträger (11) zumindest im Wesentlichen identisch ausgebildete Frontabschnitte (8) und Heckabschnitte (9) aufweisen und
wobei der Langträger (10) im Vergleich zum Kurzträger (11) über einen zusätzlichen Mittelabschnitt (14) verfügt.

## Claims

1. A series of forage harvesters (1, 1') comprising a plurality of forage harvesters (1, 1') for chopping crop (2) located on a working field, each of the forage harvesters (1, 1') comprising
- at least one operating unit in the form of a conveyor unit (3) for conveying cut crop (2) in the direction of a chopping unit (4),
- at least one operating unit in the form of a chopping unit (4) for chopping the cut crop (2),
- at least one drive device for driving at least one propulsion element, in particular an independent wheel (6) or a track roller unit (7), as well as the operating unit, and also
- at least one continuous main beam for receiving the operating units as well as the drive device,
wherein, by means of the main beam, at least a proportion of the weight forces of the operating units and of the drive device can be dissipated,
wherein the operating units are at least indirectly connected in a front section (8) and the drive device is at least indirectly connected in a rear section (9) of the main beam in the same force-transmitting manner,
**characterized in that**
a main beam of a forage harvester (1) of the series constructed in the form of a long beam (10) has a length (12) which exceeds a length (13) of a main beam of another forage harvester (1') of the series constructed in the form of a short beam (11), so that the long beam (10) and the short beam (11) are different in length,
wherein both the long beam (10) as well as the short beam (11) have at least substantially identically constructed front sections (8) and rear sections (9), and
wherein the long beam (10) has an additional central section (14) compared to the short beam (11),
wherein all of the forage harvesters (1) of the series which are equipped with long beams (10) are equipped with propulsion elements in the form of track roller units (7) on at least their front axles, and wherein all of the forage harvesters of the series which are equipped with a short beam (11) are equipped with propulsion elements in the form of independent wheels (6) on their front axles.

2. The series according to claim 1, **characterized in that** a length (15) of the central section (14) substantially corresponds, preferably completely corresponds, to the difference in length between the long beam (10) and the short beam (11).

3. The series according to claim 1 or claim 2, **characterized in that** the long beam (10) and the short beam (11) are constructed as single pieces.

4. A method for the manufacture of a series of forage harvesters (1, 1'), comprising the following steps of the method:
a) operating units of the respective forage harvester (1, 1') are at least indirectly mounted in or on a front section (8) of a main beam,
b) a drive device of a respective forage harvester (1, 1') of the series is mounted in a rear section (9) of the main beam,
c) propulsion elements, in particular independent wheels (6) and/or track roller units (7), by means of which the completed forage harvester (1, 1') can come into direct contact with the ground (16), are at least indirectly connected to the main beam so that forces acting on the forage harvester (1, 1') can be transmitted onto the propulsion elements and eventually onto the ground (16) by means of the main beam,
**characterized by** the following steps of the method:
d) during the manufacture of at least one forage harvester (1') of the series, a main beam in the form of a short beam (11) is selected and used in the further method wherein the forage harvester (1') produced in this manner is provided with propulsion elements in the form of independent wheels (6), at least on its front axle,
e) during the manufacture of at least one other forage harvester (1) of the series, a main beam in the form of a long beam (10) is selected and used in the further method wherein the forage harvester (1) produced in this manner is provided with propulsion elements in the form of track roller units (7), at least on its front axle,
wherein a length (12) of the long beam (10) exceeds a length (13) of the short beam (11),
wherein both the long beam (10) as well as the short beam (11) have at least substantially identically constructed front sections (8) and rear sections (9), and
wherein the long beam (10) has an additional central section (14) compared to the short beam (11).

## Revendications

1. Série d'ensileuses (1, 1'), incluant une pluralité d'ensileuses (1, 1') pour ensiler du produit de récolte (2) se trouvant dans une zone de travail, chacune des ensileuses (1, 1') incluant
- au moins un organe de travail en forme d'organe d'amenée (3) pour amener du produit de récolte coupé (2) en direction d'un organe de hachage (4),
- au moins un organe de travail en forme d'organe de hachage (4) pour hacher le produit de récolte coupé (2),
- au moins un équipement d'entraînement pour entraîner au moins un élément de propulsion, en particulier une roue individuelle (6) ou un train de roulement à chenilles (7) ainsi que les organes de travail, ainsi que
- au moins un support principal traversant pour recevoir les organes de travail ainsi que l'équipement d'entraînement,
des forces pondérales des organes de travail ou de l'équipement d'entraînement pouvant être dissipées au moins en partie au moyen du support principal,
les organes de travail étant reliés au moins indirectement dans une portion avant (8) et l'équipement d'entraînement au moins indirectement dans une portion arrière (9) du support principal à celui-ci de manière à transmettre les forces,
**caractérisée en ce qu'**un support principal, conformé en support long (10), d'une ensileuse (1) de la série présente une longueur (12) qui excède une longueur (13) d'un support principal, conformé en support court (11), d'une autre ensileuse (1') de la série, de sorte que le support long (10) et le support court (11) présentent une différence de longueur,
aussi bien le support long (10) que le support court (11) présentant des portions avant (8) et des portions arrière (9) de conception au moins sensiblement identique et
le support long (10) disposant, par rapport au support court (11), d'une portion centrale supplémentaire (14),
toutes les ensileuses (1) de la série qui sont équipées d'un support long (10) étant équipées au moins sur leur essieu avant d'éléments de propulsion en forme de trains de roulement à chenilles (7), et toutes les ensileuses de la série qui sont équipées d'un support court (11) étant équipées sur leur essieu avant d'éléments de propulsion en forme de roues individuelles (6) .

2. Série selon la revendication 1, **caractérisée en ce qu'**une longueur (15) de la portion centrale (14) correspond au moins sensiblement, de préférence entièrement, à la différence de longueur entre le support long (10) et le support court (11).

3. Série selon la revendication 1 ou 2, **caractérisée en ce que** les supports longs (10) et les supports courts (11) sont conçus d'une seule pièce.

4. Procédé de fabrication d'une série d'ensileuses (1, 1'), incluant les étapes de procédé suivantes
a) des organes de travail de l'ensileuse respective (1, 1') sont montés au moins indirectement dans ou sur une portion avant (8) d'un support principal.
b) Un équipement d'entraînement d'une ensileuse respective (1, 1') de la série est monté dans une portion arrière (9) du support principal.
c) Des éléments de propulsion, en particulier des roues individuelles (6) et/ou des trains de roulement à chenilles (7), au moyen desquels l'ensileuse terminée (1, 1') peut venir en contact direct avec un terrain (16), sont reliés au moins indirectement au support principal, de sorte que des forces agissant sur l'ensileuse (1, 1') sont transférables aux éléments de propulsion et finalement au terrain (16) au moyen du support principal,
**caractérisé par** les étapes de procédé suivantes :
d) Au cours de la fabrication au moins d'une ensileuse (1') de la série, un support principal en forme de support court (11) est choisi et utilisé pour la suite du procédé, l'ensileuse (1') ainsi fabriquée étant équipée au moins sur son essieu avant avec des éléments de propulsion en forme de roues individuelles (6) .
e) Au cours de la fabrication au moins d'une autre ensileuse (1) de la série, un support principal en forme de support long (10) est choisi est utilisé pour la suite du procédé, l'ensileuse (1) ainsi fabriquées étant équipée au moins sur son essieu avant avec des éléments de propulsion en forme de trains de roulement à chenilles (7),
une longueur (12) du support long (10) excédant une longueur (13) du support court (11),
aussi bien le support long (10) que le support court (11) comportant des portions avant (8) et des portions arrière (9) de conception au moins sensiblement identique, et
le support long (10) disposant, par rapport au support court (11), d'une portion centrale supplémentaire (14).
